# EUROPEAN PATENT APPLICATION

(11) **EP 3 712 576 A1**
(43) Date of publication of application: **23.09.2020**
(21) Application number: 18877753.6
(22) Date of filing: 17.10.2018
(51) Int. Cl.: G01G 19/387

(54) **COMBINATORIAL WEIGHING DEVICE**

(30) Priority: 15.11.2017 JP 2017220256
(71) Applicant: Ishida Co., Ltd., Kyoto-shi, Kyoto 606-8392 (JP)
(72) Inventor: KAGEYAMA, Toshiharu, Ritto-shi Shiga 520-3026 (JP); IKEDA, Shinya, Ritto-shi Shiga 520-3026 (JP); TSUDA, Tetsuya, Ritto-shi Shiga 520-3026 (JP); NONOHARA, Yasunari, Ritto-shi Shiga 520-3026 (JP)
(74) Representative: Gill Jennings & Every LLP
(86) International application number: PCT/JP2018/038664
(87) International publication number: WO 2019/097941

(57) **Abstract**

Avoiding the discharge of lightweight articles as much as possible while improving the yield. A combination weighing device (1) comprises: a transport unit (10, 11) configured to transport an article (100) supplied from an outside; a plurality of hoppers (13) configured to perform a measurement while temporarily holding the article (100) transported by the transport unit (10, 11) to acquire a mass value of the article (100); and a controller (5) configured to select a combination of the hoppers (13) to discharge the article (100) from the hopper (13) included in the selected combination based on a target mass value set in advance and the mass value acquired in each of the plurality of hoppers (13). The target mass value is a value obtained by adding a correction value to a mass value requested by a user, and the correction value is set to a different value depending on a number of the hoppers (13) used for the combination.

## Description

### TECHNICAL FIELD

The present invention relates to a combination weighing device.

### BACKGROUND ART

As described in Patent Literature 1, in the conventional combination weighing device, a target mass value, an upper limit value, and a lower limit value, which are used when a combination of hoppers for discharging articles is determined, are set. The combination weighing device is configured to determine a combination of hoppers for discharging the article based on the mass value and the target mass value of the article held in each hopper.

Here, the lower limit value is a mass value (displayed mass value) requested by the user, and the target mass value is a value obtained by adding a correction value to the displayed mass value. The correction value is a value uniquely determined from the relationship between the average value of the number of hoppers included in the selected combination (average combination selection head number) and the weighing accuracy (single-head weighing accuracy) in each hopper.

### CITATION LIST

### NON PATENT LITERATURE

Non patent Literature 1: JP H02-054885 B

### SUMMARY OF INVENTION

However, the conventional combination weighing device as described above is configured such that the correction value increases as the average combination selection head number increases, and the correction value decreases as the average combination selection head number decreases.

Therefore, when the number of hoppers included in the actually selected combination is small, the target mass value has a margin more than the originally occurring calculation error, and when the number of hoppers included in the actually selected combination is large, the target mass value has no margin for the calculation error originally occurring.

As a result, the conventional combination weighing device as described above has the problem that there is a possibility of lowering the yield and discharging lightweight articles with less than the target mass value from the hopper. In particular, since the discharge of light-weight articles is a cause of complaint, it is necessary to set the correction value higher, and as a result, there is a problem that the yield is deteriorated.

Therefore, the present invention has been made to solve the above-mentioned problems, and an object of the present invention is to provide a combination weighing device capable of avoiding the discharge of lightweight articles as much as possible while improving the yield.

According to a first feature of the present invention, a combination weighing device comprises a transport unit configured to transport an article supplied from an outside, a plurality of hoppers configured to perform a measurement while temporarily holding the article transported by the transport unit to acquire a mass value of the article, and a controller configured to select a combination of the hoppers to discharge the article from the hopper included in the selected combination based on a target mass value set in advance and the mass value acquired in each of the plurality of hoppers, wherein the target mass value is a value acquired by adding a correction value to a mass value requested by a user, and wherein the correction value is set to a different value depending on the number of the hoppers used for the combination.

### BRIEF DESCRIPTION OF DRAWINGS

Fig. 1 is a diagram showing an example of the outer shape of a combination weighing device 1 according to a first embodiment.
Fig. 2 is a diagram schematically showing an example of the combination weighing device 1 according to the first embodiment.
Fig. 3 is a flowchart showing an example of the operation of the combination weighing device 1 according to the first embodiment.

### DESCRIPTION OF EMBODIMENTS

Hereinafter, embodiments will be described in detail with reference to the drawings as appropriate. However, the detailed description more than necessary may be omitted. For example, detailed description of already well-known matters and redundant description of substantially the same configuration may be omitted. This is to avoid unnecessary redundancy in the following description and to facilitate understanding by those skilled in the art.

It is noted that the inventors provide the attached drawings and the following description so that those skilled in the art can fully understand the present disclosure, and do not intend to limit the claimed subject matter by them.

### (First Embodiment)

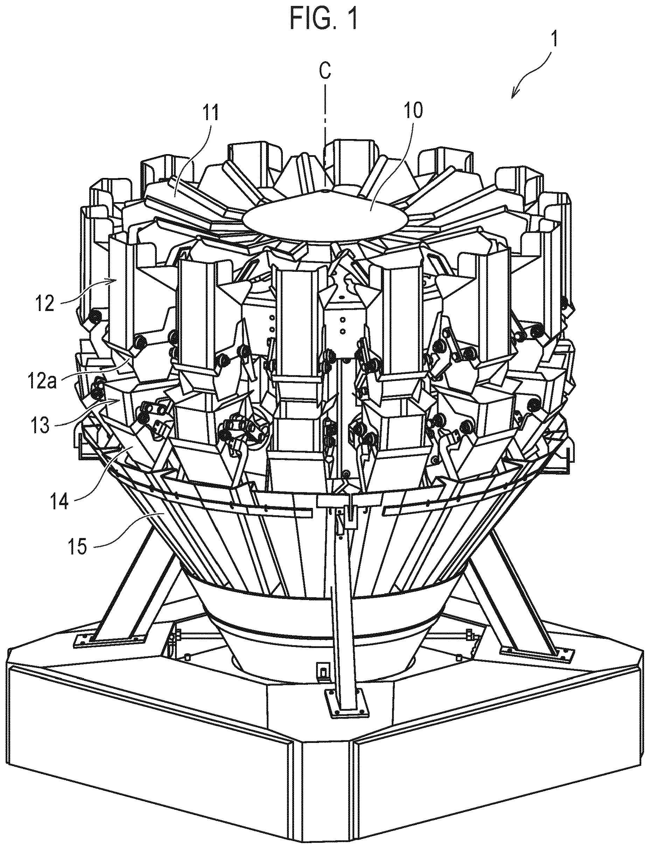

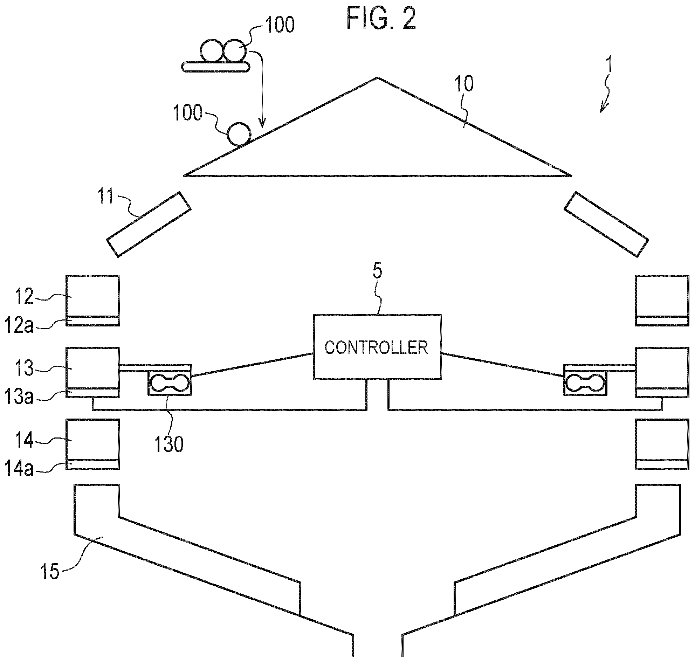

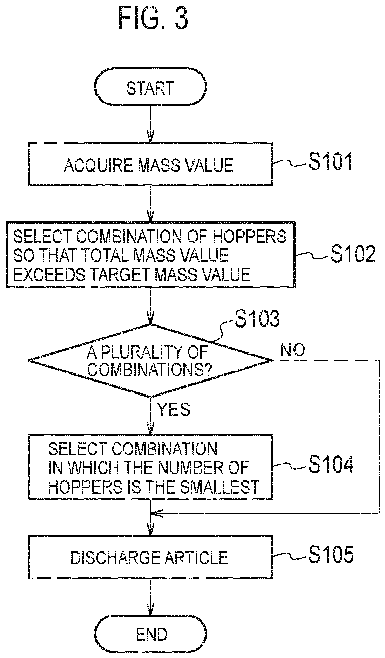

The combination weighing device 1 according to the first embodiment of the present invention will be described below with reference to Figs. 1 to 3. Fig. 1 is a diagram showing an example of the outer shape of the combination weighing device 1 according to the first embodiment, Fig. 2 is a diagram schematically showing an example of the combination weighing device 1 according to the first embodiment, and Fig. 3 is a flowchart showing an example of the operation of the combination weighing device 1 according to the first embodiment.

As shown in Figs. 1 and 2, the combination weighing device 1 according to the present embodiment includes a dispersion table 10, a supply trough 11, a plurality of pool hoppers 12, a plurality of weighing hoppers 13, a plurality of booster hoppers 14, and a collective discharge chute 15.

As shown in Fig. 2, the dispersion table 10 is configured to rotate an article 100 supplied from the outside about a central axis C defined in a substantially vertical direction and to transport the article 100 in a direction away from the central axis C.

For example, the dispersion table 10 in the present embodiment is configured to transport the article 100 in a direction away from the central axis C by performing rotational driving around the central axis C extending in the substantially vertical direction, but the dispersion table 10 is not limited to this configuration, and any configuration may be used as long as it has a function of transporting the article 100 toward the supply trough 11. For example, the article 100 may be a soft, sticky food, such as raw chicken. However, the article 100 is not limited to this.

The supply trough 11 is configured to supply the article 100 supplied from the dispersion table 10 to each of the plurality of pool hoppers 12 provided corresponding downstream of the supply trough 11.

In the present embodiment, the dispersion table 10 and the supply trough 11 constitute a transport unit configured to transport the article 100 supplied from the outside.

Each of the pool hoppers 12 is configured to temporarily hold the article 100 supplied from the supply trough 11. Each pool hopper 12 is provided with a gate 12a at its lower part, and by the opening and closing operation of the gate 12a, the article 100 held in each pool hopper 12 is discharged to the weighing hopper 13 provided below the gate 12a.

Each of the weighing hoppers 13 is configured to temporarily hold the article 100 discharged by the pool hopper 12. Each weighing hopper 13 is provided with a gate 13a at its lower part, and by the opening and closing operations of each gate, the article 100 held in each weighing hopper 13 is discharged to the booster hopper 14 disposed below the gate 13a.

Each of the weighing hoppers 13 is connected to a mass detector 130 including a load cell or the like. That is, each of the weighing hoppers 13 is configured to perform a measurement while temporarily holding the article 100 transported by the supply trough 11 and acquire the mass value of the article 100. The weighing hopper 13 of the present embodiment is configured as the hopper of the present invention.

Each of the booster hoppers 14 is configured to store the article 100 supplied from the weighing hopper 13 and to temporarily hold the article 100. Each booster hopper 14 is provided with a gate 14a at its lower part, and by the opening and closing operations of each gate 14a, the article 100 held in each booster hopper 14 is discharged to the collective discharge chute 15 disposed below each gate 14a.

Each of the booster hoppers 14 is configured to store the article 100 supplied from the weighing hopper 13 and to temporarily hold the article 100. Each booster hopper 14 is provided with a gate 14a at its lower part, and by the opening and closing operations of each gate 14a, the article 100 held in each booster hopper 14 is discharged to the collective discharge chute 15 disposed below each gate 14a.

The collective discharge chute 15 is configured to collect the article 100 discharged from the plurality of booster hoppers 14 to drop it downward.

A controller 5 is configured to select a combination of weighing hoppers 13 based on a target mass value set in advance and a mass value of the article 100 acquired in each of the plurality of weighing hoppers 13, and to discharge the article 100 from the weighing hoppers 13 included in the combination of the selected weighing hoppers 13.

Specifically, the controller 5 is configured to select the combination of the weighing hoppers 13 so that the total of the mass values of the article 100 discharged from the weighing hoppers 13 exceeds the preset target mass value.

The controller 5 is configured to acquire the mass value of the article 100 from the mass detector 130 connected to the weighing hopper 13. Further, the controller 5 is configured to perform control to open the gate 13a of the weighing hopper 13 selected to discharge the article 100 (that is, the weighing hopper 13 included in the combination of the selected weighing hoppers 13).

Here, the above-mentioned target mass value is a value obtained by adding a correction value to the mass value requested by the user, and the correction value is set to a different value depending on the number of weighing hoppers 13 used for the combination of the selected weighing hoppers 13.

According to this configuration, the correction value is changed according to the number of the weighing hoppers 13 included in the combination of the actually selected weighing hoppers 13, so that an appropriate target mass value can be set for the originally occurring calculation error.

For example, the correction value may be set so as to decrease as the number of the weighing hoppers 13 used for the combination of the selected weighing hoppers 13 decreases.

According to this configuration, it is possible to eliminate the adverse effect that the target mass value has a margin more than the originally occurring calculation error in the case where the number of hoppers included in the actually selected combination is small.

In addition, when there is a plurality of combinations of the weighing hoppers 13 having the target mass values described above, the controller 5 may be configured to select a combination in which the number of the weighing hoppers 13 used for the combination of the weighing hoppers 13 is small.

According to this configuration, it is possible to reduce the generated calculation error by reducing the number of the weighing hoppers 13 included in the combination of actually selected weighing hoppers 13 as much as possible.

Hereinafter, with reference to Fig. 3, an example of the operation of the combination weighing device 1 according to the present embodiment will be described.

As shown in Fig. 3, in step S101, the combination weighing device 1 performs a measurement while temporarily holding the article 100 transported by the supply trough 11, and acquires the mass value of the article 100.

In step S102, the combination weighing device 1 selects a combination of the weighing hoppers 13 so that the total of the mass values of the article 100 discharged from the weighing hoppers 13 exceeds a preset target mass value.

In step S103, the combination weighing device 1 determines whether there is a plurality of combinations of the weighing hoppers 13 exceeding the above-mentioned target mass value. When it is determined that there is a plurality of combinations, the operation proceeds to step S104. When it is determined that there is not a plurality of combinations, the operation proceeds to step S105.

In step S104, the combination weighing device 1 selects a combination of the weighing hoppers 13 in which the number of the weighing hoppers 13 is small.

In step S105, the combination weighing device 1 discharges the article 100 from the weighing hoppers 13 included in the combination of selected weighing hoppers 13.

According to the combination weighing device 1 according to the present embodiment, discharge of lightweight articles can be avoided as much as possible while improving the yield.

As mentioned above, although the present invention was explained by the above-mentioned embodiment, it should not be understood that the statement and drawing which make part of the disclosure in the embodiments limit the present invention. From this disclosure, various alternative embodiments, examples and operational techniques will be apparent to those skilled in the art.

The entire content of Japanese Patent Application No. 2017-220256 filed on Nov. 15, 2017 is incorporated herein by reference.

### INDUSTRIAL APPLICABILITY

It is possible to provide a combination weighing device capable of avoiding the discharge of lightweight articles as much as possible while improving the yield.

### REFERENCE SIGNS LIST

- 1: combination weighing device
- 10: dispersion table (transport unit)
- 11: supply trough (transport unit)
- 12: pool hopper
- 13: weighing hopper (hopper)
- 130: mass detector
- 14: booster hopper
- 12a, 13a, 14a: gate
- 15: collective discharge chute
- 100: article
- 5: controller

## Claims

1. A combination weighing device comprising:
a transport unit configured to transport an article supplied from an outside;
a plurality of hoppers configured to perform a measurement while temporarily holding the article transported by the transport unit to acquire a mass value of the article; and
a controller configured to select a combination of the hoppers to discharge the article from the hopper included in the selected combination based on a target mass value set in advance and the mass value acquired in each of the plurality of hoppers, wherein
the target mass value is a value obtained by adding a correction value to a mass value requested by a user, and
the correction value is set to a different value depending on a number of the hoppers used for the combination.

2. The combination weighing device according to claim 1, wherein the correction value is set so as to decrease as the number of the hoppers used for the combination decreases.

3. The combination weighing device according to claim 1 or 2, wherein the controller selects a combination in which the number of the hoppers used for the combination is small when there is a plurality of combinations exceeding the target mass value.
